(19) Europäisches Patentamt
European Patent Office
Office européen des brevets

(11) EP 4 381 014 B1

(12) EUROPEAN PATENT SPECIFICATION

(45) Date of publication and mention of the grant of the patent:
**01.10.2025 Bulletin 2025/40**

(21) Application number: **22760960.9**

(22) Date of filing: **04.08.2022**

(51) International Patent Classification (IPC):
***C08L 33/24*** *(2006.01)*

(52) Cooperative Patent Classification (CPC):
(C-Sets available)
**C08L 33/24** (Cont.)

(86) International application number:
**PCT/EP2022/071920**

(87) International publication number:
**WO 2023/012268 (09.02.2023 Gazette 2023/06)**

(54) **POLYMER COMPOSITION BASED ON POLY(METH)ACRYLIMIDE FOR TRIBOLOGICAL APPLICATIONS**

POLYMERZUSAMMENSETZUNG AUF BASIS VON POLY(METH)ACRYLIMID FÜR TRIBOLOGISCHE ANWENDUNGEN

COMPOSITION POLYMÈRES À BASE DE POLY(MÉTH)ACRYLIMIDE POUR DES APPLICATIONS TRIBOLOGIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2021 EP 21189647**

(43) Date of publication of application:
**12.06.2024 Bulletin 2024/24**

(73) Proprietor: **Röhm GmbH**
**64295 Darmstadt (DE)**

(72) Inventors:
- **VORHOLZ, Johannes**
  **63755 Alzenau (DE)**
- **RICHTER, Ralf**
  **63457 Hanau (DE)**
- **ELSÄSSER, Hartmut**
  **64572 Büttelborn (DE)**
- **KRAFT, Jörg**
  **69250 Schönau (DE)**

(74) Representative: **Röhm Patent Association**
**IP Management**
**Deutsche-Telekom-Allee 9**
**64295 Darmstadt (DE)**

(56) References cited:
**CN-B- 108 203 543**
**DE-A1- 19 949 239**
**US-A1- 2008 129 044**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 381 014 B1

(52) Cooperative Patent Classification (CPC): (Cont.)

C-Sets
**C08F 8/32, C08F 120/14;**
**C08L 33/24, C08L 27/18**

## Description

Technical field

The present invention relates to polymer compositions based on imidated poly(meth)acrylate, especially imidated polymethyl methacrylate, wherein the polymer composition comprises a polymer matrix A and at least one tribological additive B, especially selected from organic or inorganic solid hardening particles. The inventive polymer compositions and formed articles made thereof exhibit low friction coefficient and high wear resistance even at elevated temperatures and can advantageously be used in tribological application, in replacement of high-performance materials, such as polyether ether ketone (PEEK).

Furthermore, the present invention is directed to a process for producing the inventive polymer composition, and to formed articles made thereof, having improved tribological properties. Therefore, the inventive formed article can be used in tribological applications, where the formed article involves any movable part or is in moving contact with other articles, such as metal articles, plastic articles, and the like. For example, the formed articles may be utilized in transport and mobility area, and in industrial applications, e.g. for pump parts, chain guides, sliding bearings, ball gearings, sliding shoes, gear wheels, rolls, pistons, piston rings, and the like.

Generally, tribology refers to the science of friction, lubrication and wear, and typically tribological applications refer to systems including interacting surfaces in relative motion underlying the principles of friction, lubrication, and wear. Tribological applications are relevant in many fields of mechanical engineering, such as vehicles, machinery and other equipment for power generation and transportation.

In recent years the use of plastics in tribological applications, instead of metals, becomes more and more important. In comparison to metallic workpieces, thermoplastics workpieces offer several advantages, such as low wear, good damping behavior and noise reduction, lower weight and thus lightweight construction, corrosion resistance, good emergency running properties, good starting behavior, no need for external lubrication, freedom from maintenance and more freedom in shaping and economic producibility. Plastic components and workpieces suitable for tribological applications requires specific polymer compositions having very good tribological properties, such as low wear rate and low friction coefficient.

Various wear-resistant components and workpieces based on plastics or plastics composite materials are described in the prior art. Often such components are made from high-performance plastics, such as polytetrafluoroethylene (PTFE), polyvinylidene fluoride (PVDF), polyaryl sulfone (including polysulfone PSU, polyethersulfone PESU, and polyphenylene sulfone PPSU), polyether ketone (e.g. polyether ether ketone PEEK), and polyetherimide, as well as from other thermoplastic materials with lower heat resistance, e.g. polyoxymethylene (POM), polyesters, polyamides, polyethylene terephthalate, polypropylene, polystyrene, and polystyrene copolymers, together with various fillers. Such tribological modified polymer materials are described widely in the prior art, for example DE10329228A1, US 2013/0178565, and US 2005/0208313.

The document DE 199 49 239 A1 describes a pull-out device for a cooking chamber, wherein the device encompasses rails guided by ball bearings or roller bearings and wherein the balls or the rollers of the bearings are made of a self-lubricating material at least on their surface. For example, suitable said self-lubricating materials are metals, graphite composite materials, ceramic materials with embedded lubricants, or high-temperature-resistant plastics with embedded lubricants, e.g. metal powder, graphite particles. For example, polyimides (PI), in particular polymethacrylimide (PMI), polyoxymethylene (POM), and polytetrafluoroethylene PTFE, are mentioned as high-temperature-resistant plastics.

In order to obtain improved tribological plastic materials often modifications using reinforcing fibers or materials known as solid lubricants or hardening fillers are used, for example polytetrafluoroethylene (PTFE), graphite, aramid fibers, molybdenum disulfide, as well as metal oxides, nitrides and carbides (e.g. silicon dioxide, boron nitride, and silicon nitride). Typically, a disadvantage is that the use of such hardening fillers causes marked impairment of the mechanical properties, such as reduced tensile strength.

Polymer compositions comprising polymer particles, e.g. powder materials made of polytetrafluoroethylene PTFE or ultra-high molecular weight polyethylene PE-UHMW, in order to improve tribological properties are described in the prior art. For example, WO 2012/095214 A1 and US 2012/0114890 A1 describe anti-wear tapes comprising polyphenylene sulfone PPSU and PTFE polymer particles. For example, WO 2018/069838 describes wear resistant polymer compositions based on polyoxymethylene comprising a tribological modifier system which is a combination of a fluoropolymer, such as PTFE, and a high molecular weight polyethylene.

As friction often causes a considerably rise in temperature in the tribological part, the heat stability of plastic materials used in tribological application is another important issue. With the trend towards more and more compact designs for reasons of material and energy efficiency, these assemblies are often exposed to high loads as well as to high temperatures. Here, plastics based on poly(meth)acrylimides, such as polymethyl methacrylimide (PMMI), are favorable, due to their high glass transition temperature of typically above 150 °C, preferably above 170 °C, and high service

temperature, their mechanical properties, high surface hardness, and good processability.

Poly(meth)acrylimides are based on imidated poly(meth)acrylate, such as imidated polymethyl methacrylate (PMMA), and are a particular class of high-transparency and at the same time particularly heat distortion-resistant thermoplastics. Shaped bodies made of this material can be exposed to significantly higher temperatures over prolonged periods than shaped bodies made of other high-transparency thermoplastics, for example polymethyl methacrylate (PMMA). These high-performance thermoplastics are for example used for the coverage of lamps or light guides. The preparation of poly(meth)acrylimides is known and disclosed, for example, in GB-B 1 078 425, GB-B 1 045 229, US-B 3 627 711, or US-B 4 139 685.

It is an object of the present invention to provide polymer compositions having improved tribological properties compared to the state of the art, in particular having improved tribological properties at temperatures of about 80 °C and higher. In particular the tribological polymer compositions should exhibit low coefficient of friction and low wear rate as well as adequate mechanical properties, e.g. high tensile modulus and tensile strength, and good optical appearance. Further, the production of articles of arbitrary shape from said polymer composition should be easy and inexpensive.

Disclosure of the invention

It was surprisingly found that a polymer composition comprising a polymer matrix based on poly(meth) acrylimide, in particular based on polymethyl methacrylimide (PMMI), and comprising at least one tribological additive, e.g. selected from solid hardening particles, shows excellent tribological properties, i.e. low friction coefficient and high wear resistance even at elevated temperatures, such as at 80 to 100 °C. The inventive polymer composition and formed articles made thereof show even improved tribological performance compared to standard tribological polymer systems, such as polymer materials based on polyether ether ketones PEEK (e.g. Victrex® tribo grades).

Thus, the present invention is directed to a polymer composition for tribological applications comprising a polymer matrix A, which comprises at least on one poly(meth)acrylimide, preferably at least one poly(meth)acrylalkylimide, especially polymethyl methacrylimide (PMMI); and at least one tribological additive B, selected from organic particulate fillers B1, inorganic particulate fillers B2 and reinforcing fibers B3, wherein the at least one poly(meth)acrylimide comprises:

i) from 1 to 95 wt.-%, preferably from 20 to 92 wt.-%, based on the total weight of the poly(meth)acrylimide, units of formula I

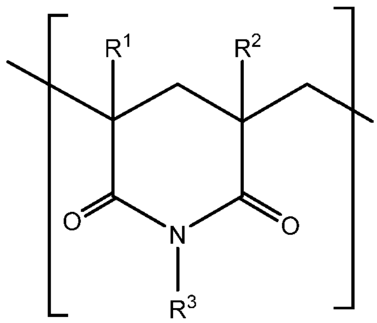

(I);

ii) from 1 to 70 wt.-%, preferably from 2 to 60 wt.-%, based on the total weight of the poly(meth)acrylimide, units of formula II

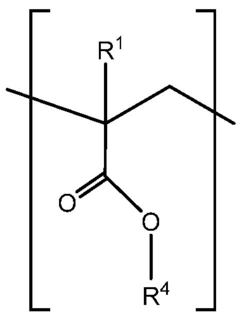

(II);

iii) from 1 to 20 wt.-%, preferably from 1 to 12 wt.-%, based on the total weight of the poly(meth)acrylimide, units of

formula III

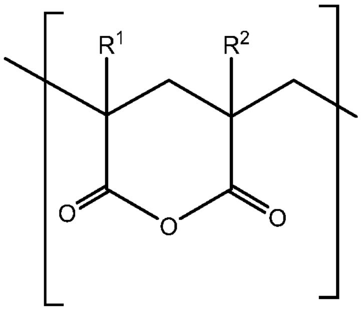
(III);

and

iv) from 0 to 15 wt.-%, preferably from 0 to 10 wt.-%, based on the total weight of the poly(meth)acrylimide, units of formula IV

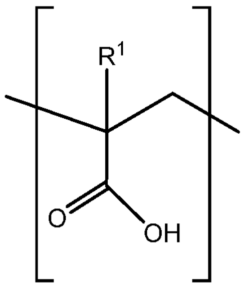
(IV),

wherein

$R^1$ and $R^2$ are, independently from each other, hydrogen or $C_1$-$C_6$ alkyl, preferably hydrogen or methyl;
$R^3$ is hydrogen, $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen; and
$R^4$ is $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen.

The polymer compositions of the invention have improved tribological properties, in particular a low coefficient of friction and a low wear rate (i.e. low wear coefficient k), and moreover have good mechanical and heat stability. Even comprising relatively high amounts of the tribological additive B, the inventive polymer compositions show good to excellent mechanical properties, such as adequate tensile strength, high tensile modulus, as well as high surface hardness. Further, the inventive polymer compositions provide higher temperature stability, such as high Vicat temperature, and as a consequence allows higher service temperatures compared to several standard tribological polymer systems. Thus, the inventive polymer compositions and formed articles made thereof show improved balance of tribological resistance and mechanical properties, even under thermal load.
In line with this, PMMI-based polymer materials could become a low-cost alternative to commonly known tribological polymer materials, such as PEEK-based materials, in particular in dry-lubricated mechanical parts, such as plain bearings, thrust washers, bushings or gear wheels.
Another advantage is that the inventive polymer compositions exhibit good process stability and good processability and can be easily processed via commonly known thermoplastic forming processes, such as injection molding or extrusion. Thus, it is possible to provide precisely formed molded articles, having excellent tribological properties. Such articles can preferably be used for tribological applications, for example including movable parts in motor vehicles or machines.
In terms of the present invention "tribological" or "tribological application" refers to systems including interacting surfaces in relative motion underlying the principles of friction, lubrication, and wear.
Unless otherwise stated, all amounts given in % refers to wt.-% (% by weight).

Detailed description of the invention

In particular, the present invention is directed to a polymer composition comprising (preferably consisting of):

A. a polymer matrix A comprising at least 50 wt.-%, based on the polymer matrix A, of polymethyl methacrylimide (PMMI);
B. at least one tribological additive B, selected from organic particulate fillers B1, inorganic particulate fillers B2 and reinforcing fibers B3, for example including polytetrafluoroethylene (PTFE) particles, carbon materials (e.g. graphite, graphene, carbon fibers, carbon nanotubes CNT), molybdenum disulfide ($MoS_2$), silicon nitride ($Si_3N_4$), silicon carbide (SiC), boron nitride (BN), boron carbide ($B_4C$), or metal oxides, such as titanium dioxide, aluminum oxide, silicon dioxide and cerium dioxide;
C. optionally at least one lubricant C, preferably selected from silicon oil,
D. optionally one or more further component D, preferably selected from conventional auxiliaries and additives.

In a preferred embodiment, the inventive polymer composition comprises, in each case based on the total weight of the polymer composition:

from 50 to 97 wt.-%, preferably 60 to 95 wt.-%, more preferably 60 to 93 wt.-%, of the polymer matrix A;
from 3 to 30 wt.-%, preferably 5 to 25 wt.-%, more preferably 7 to 25 wt.-%, of the at least one tribological additive B, preferably selected from polytetrafluoroethylene (PTFE) particles, carbon materials (e.g. graphite, graphene, carbon fibers, carbon nanotubes CNT), molybdenum disulfide ($MoS_2$), silicon nitride ($Si_3N_4$), silicon carbide (SiC), boron nitride (BN), boron carbide ($B_4C$), and metal oxides, such as titanium dioxide, aluminium oxide, silicon dioxide and cerium dioxide;
from 0 to 5 wt.-%, preferably 0 to 3 wt.-%, of at least one lubricant C, preferably selected from silicon oil;
from 0 to 20 wt.-%, preferably 0 to 10 wt.-%, of one or more further component D, preferably selected from conventional auxiliaries and additives.

In case the optional components C and/or D are present, the amount of the polymer matrix A may be adapted so that the sum of components adds up to a total of 100 wt.-%.

Preferably, the inventive polymer composition is a thermoplastic molding composition, which can be processed and formed thermally. Preferably, the polymer matrix A is a thermoplastic matrix comprising (preferably consisting of) one or more thermoplastic poly(meth)acrylimide and optionally one or more additional thermoplastic polymers.

Polymer matrix A

The polymer matrix A of the inventive polymer composition comprises one or more poly(meth)acrylimide, preferably at least on polyalkyl(meth)acrylimide, preferably polyalkyl(meth)acrylalkylimide. Preferably, the polymer matrix A comprises at least 50 wt.-%, more preferably at least 70 wt.-%, even more preferably at least 80 wt.-%, based on the total polymer matrix A, of the at least one poly(meth)acrylimide.

Especially, the polymer matrix A is present in an amount of 50 to 95 wt.-%, preferably 60 to 93 wt.-%, more preferably 70 to 92 wt.-%, based on the total weight of the polymer composition. Typically, if one or more optional component, e.g. component C and/or D is present, the amount of the polymer matrix may be reduced accordingly.

The polymer matrix A may comprise one or more other polymers, which form a homogenous blend with the at least one poly(meth)acrylimide. Typically, the polymer matrix A comprises 50 to 100 wt.-%, preferably 70 to 100 wt.-%, based on the total polymer matrix A, of one or more poly(meth)acrylimide and 0 to 50 wt.-%, preferably 0 to 30 wt.-%, based on the total polymer matrix A, of one or more other polymer, which form a blend, preferably a homogenous blend, with the poly(meth)acrylimide. For example, the other polymer in the polymer matrix A may be selected from polyalkyl (meth) acrylate (e.g. polymethyl(meth)acrylate, more preferably polymethylmethacrylate (PMMA)), polyvinylidenfluoride (PVDF), polycarbonate (PC), polyvinylchloride (PVC), polyamide (PA), styrene-acrylonitrile copolymer (SAN) and thermoplastic polyesters.

Generally, poly(meth)acrylimide (also referred to as polyglutarimide) as used in the present invention refers to polymers which are obtained by imidation of (meth)acrylic polymers, in particular poly (meth)acryl alkyl esters, wherein typically two adjacent carboxyl or carboxylate groups react with ammonia or primary amines to form a cyclic imide. Typically, the at least one poly(meth)acrylimide is selected from at least partially imidated poly(meth)acrylate, preferably from at least partially imidated polyalkyl(meth)acrylates, more preferably from at least partially imidated polymethylmethacrylate. In a preferred embodiment, the at least one poly(meth)acrylimide is polymethyl methacrylimide (PMMI). Typically, polymethyl methacrylimide (PMMI) is prepared via imidation of polymethyl methacrylate using methylamine.

In terms of the present invention "(meth)acrylate" is meant to encompass methacrylates (such as methyl

methacrylate, ethyl methacrylate etc.), acrylates such as methyl acrylate, ethyl acrylate, etc.), and mixtures thereof.

In terms of the present invention "polyalkyl (meth)acrylate" means a polymer comprising at least 30 % by weight, preferably at least 40 % by weight, more preferably at least 50 % by weight, of alkyl (meth)acrylate monomer units and includes copolymers of alkyl (meth)acrylate monomers with one or more other co-polymerizable monomer(s).

For the purposes of the present invention, particular preference is given to $C_4$-$C_{18}$-alkyl (meth)acrylates, advantageously $C_1$-$C_{10}$-alkyl (meth)acrylates, in particular C1-C4-alkyl (meth)acrylates. Preferred alkyl methacrylates encompass methyl methacrylate (MMA), ethyl methacrylate, propyl methacrylate, isopropyl methacrylate, n butyl methacrylate, isobutyl methacrylate, tert.-butyl methacrylate, pentyl methacrylate, hexyl methacrylate, heptyl methacrylate, octyl methacrylate, isooctyl methacrylate, and ethylhexyl methacrylate, nonyl methacrylate, decyl methacrylate, and also cycloalkyl methacrylates, for example cyclohexyl methacrylate, isobornyl methacrylate or ethylcyclohexyl methacrylate. Use of methyl methacrylate is particularly preferred. Preferred alkylacrylates encompass methyl acrylate, ethyl acrylate, propyl acrylate, isopropyl acrylate, n-butyl acrylate, isobutyl acrylate, tert.-butyl acrylate, pentyl acrylate, hexyl acrylate, heptyl acrylate, octyl acrylate, isooctyl acrylate, nonyl acrylate, decyl acrylate, and ethylhexyl acrylate, and also cycloalkyl acrylates, for example cyclohexyl acrylate, isobornyl acrylate or ethylcyclohexyl acrylate.

Typically, the poly(meth)acrylimide is produced by at least partially imidation of poly(meth)acrylates via reactive extrusion, e.g. using a degassing extrudes, including reaction of poly(meth)acrylate with ammonia and/or a primary amine, such as a primary alkyl-substituted amine. Typically, such imidation reaction is carried out at high pressure and high temperature in the melt or in solution. Said imidation reaction processes are for example described in US 2,146,209 and US 4,246,374.

Preferably, the polymer matrix A comprises at least 50 wt.-%, based on the polymer matrix A, of at least on poly(meth)acrylimide, which contains units of formula I

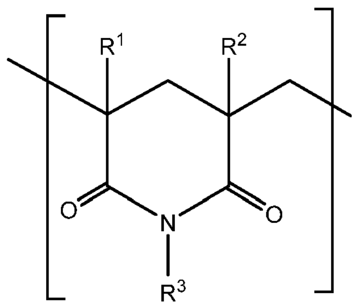

(I)

in which

> $R^1$ and $R^2$ are, independently from each other, hydrogen or $C_1$-$C_6$ alkyl, preferably hydrogen or methyl; and
> $R^3$ is hydrogen, $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen.

In particular, the structure unit described in formula I is present in the poly(meth)acrylimide to an extent of at least 5 wt.-%, preferably of at least 15 wt.-%, more preferably of at least 60 wt.-%.

According to a preferred embodiment, the at least one poly(meth)acrylimide comprises at least 5 wt.-%, preferably at least 15 wt.-%, more preferably at least 60 wt.-%, based on the total poly(meth)acrylimide, units of formula (I) as defined above, wherein preferably the residue $R^3$ is selected from $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen; wherein more preferably the residue $R^3$ is selected from $C_1$-$C_{18}$-alkyl, most preferably $R^3$ is methyl.

Preferably, in the unit of formula (I) $R^1$ and $R^2$ are each methyl; and $R^3$ is $C_1$-$C_{18}$-alkyl, more preferably $C_1$-$C_6$-alkyl, even more preferably methyl. Accordingly, the particularly preferred poly(meth)acrylimide contains (N-methyl) dimethylglutarimide units as units of formula (I).

As a result of the preparation, the poly(meth)acrylimide may contain not only units of formula (I) (i.e. glutarimide units) but also (meth)acrylic acid units, (meth)acrylic acid anhydride units, and also residual (meth)acrylic ester units.

In a preferred embodiment the polymer matrix A comprises at least 50 wt.-%, preferably at least 70 wt.-%, more preferably at least 80 wt.-%, based on the polymer matrix A, of the at least one poly(meth)acrylimide, wherein the poly(meth)acrylimide contains units of formula (I) as defined above, preferably comprises at least 5 wt.-%, preferably at least 15 wt.-%, more preferably at least 60 wt.-%, based on the total poly(meth)acrylimide, units of formula (I) as defined above.

In a further preferred embodiment, the at least one poly(meth)acrylimide comprises,

i) from 50 to 91 wt.-%, preferably 50 to 95 wt.-%, based on the total weight of the poly(meth)acrylimide, units of formula I

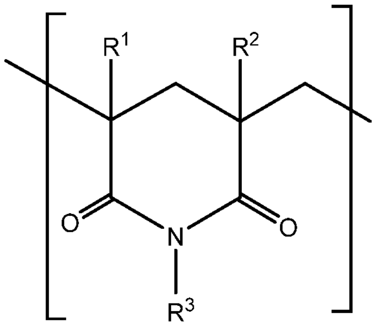

(I);

ii) from 2 to 49 wt.%, preferably 2 to 48 wt.-%, based on the total weight of the poly(meth)acrylimide, units of formula II

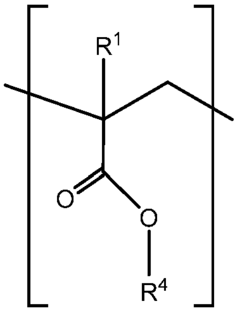

(II);

iii) from 1 to 20 wt.-%, preferably from 1 to 12 wt.-%, based on the total weight of the poly(meth)acrylimide, units of formula III

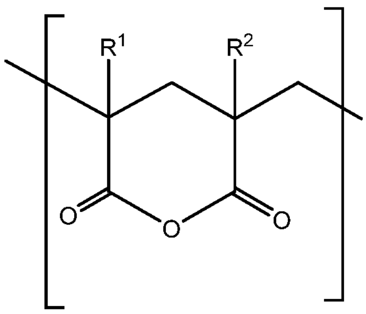

(III);

iv) from 0 to 15 wt.-%, preferably 0 to 10 wt.-%, also preferably 1 to 10 wt.-%, based on the total weight of the poly(meth) acrylimide, units of formula IV

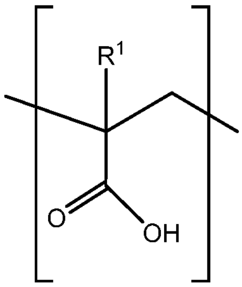

(IV).

wherein

$R^1$ and $R^2$ are, independently from each other, hydrogen or $C_1$-$C_6$ alkyl, preferably hydrogen or methyl;

$R^3$ is hydrogen, $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen, and $R^4$ is $C_1$-$C_{18}$-alkyl, $C_5$-$C_8$-cycloalkyl, $C_6$-$C_{10}$-aryl, $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen.

More preferably the poly(meth)acrylimide is built up of (essentially consists of) repeating units selected from the units (I) to (IV) as described above.

Preferably, in the unit of formulas (I) to (IV) $R^1$ and $R^2$ are each methyl; $R^3$ is $C_1$-$C_{18}$-alkyl, more preferably $C_1$-$C_6$-alkyl, even more preferably methyl, and $R^4$ is $C_1$-$C_{18}$-alkyl, more preferably $C_1$-$C_6$-alkyl, even more preferably methyl or ethyl. More preferably, $R^1$, $R^2$, $R^3$ and $R^4$ are methyl.

In addition, the poly(meth)acrylimide may contain further repeating units which arise, for example, from styrene, maleic acid or the anhydride thereof, itaconic acid or the anhydride thereof, vinylpyrrolidone, vinyl chloride or vinylidene chloride. Generally, the proportion of the comonomers, which cannot be cyclized or can be cyclized only with very great difficulty, should not exceed 30 wt.-%, preferably 20 wt.-% and particularly preferably 10 wt.-%, based on the weight of the monomers.

Preferred poly(meth)acrylimide is prepared from poly(meth)acrylates, such as polymethyl methacrylate or copolymers thereof, by imidation reaction, preferably using ammonia and/or methylamine, so that 1 to 95 wt%, preferably 20 to 92 wt%, more preferably 50 to 91 wt% of the (meth)acrylic ester groups are imidated (degree of imidation). Generally, the degree of imidation may be determined via NMR spectroscopy.

Typically, the weight average molecular weights $M_w$ of the poly(meth)acrylimide is in the range of 50,000 to 200,000 g/mol, preferably 80 000 to 120 000 g/mol.

Preferably, the poly(meth)acrylimide used according to the present invention exhibits a melt volume rate (MVR) of $\leq$ 20 $cm^3$/10 min, preferably $\leq$ 10 $cm^3$/10 min, preferably from 0.2 to 20 $cm^3$/10 min, also preferably from 1.5 to 20 $cm^3$/10 min, determined according to ISO 1133, at 260 °C using 10 kg load.

Preferably, the poly(meth)acrylimide used according to the present invention exhibits a Vicat softening temperature of at least 130 °C, more preferably of at least 150°C, even more preferably of at least 170 °C, determined according to ISO 306 (B50) using a load of 50 N and utilizing a heating rate of 50 °C /h.

According to a preferred embodiment, the polymer matrix A of the inventive polymer composition exhibits a Vicat softening temperature of at least 130 °C, more preferably of at least 150°C, even more preferably of at least 170 °C, determined according to ISO 306 (B50) using a load of 50 N and utilizing a heating rate of 50 °C /h.

Tribological additive B

The inventive polymer composition comprises at least one tribological additive B, and at least one tribological additive B, selected from organic particulate fillers B1, inorganic particulate fillers B2 and reinforcing fibers B3. Preferably, the at least tribological additive B is present in an amount of 5 to 30 wt.-%, more preferably 7 to 25 wt.-%, more preferably 8 to 20 wt.-%, based on the total weight of the polymer composition.

Typically, the tribological additive B is a solid-state tribological additive selected from so called solid hardening particles and/or fibers, which are dispersed in the polymer matrix A, preferably homogenously dispersed in the polymer matrix A, in form of a dispersed solid phase, e.g. a particulate solid disperse phase. Generally, the tribological additive B do not form a homogenous blend with the polymer matrix A.

Typically, the solid hardening particles of tribological additive B have an averaged particle diameter in the range from 50 nm to 100 $\mu$m.

Preferably, the at least one tribological additive B is selected from organic particulate fillers B1, such as solid polymer particles, and inorganic particulate fillers B2. Even more preferably, the at least one tribological additive B comprises at least one organic particulate filler B1, optionally in combination with an inorganic particulate filler B2 and/or a reinforcing fiber B3. More preferably, the inventive polymer composition comprises at least one organic particulate fillers B1 as sole tribological additive B.

Generally, fillers may be divided into various groups on the basis of their particle shape, in particular via the ratio of length to thickness (also termed L/D ratio, shape factor, or aspect ratio). Particulate fillers with spheroidal or ellipsoidal particles generally have an L/D ratio in the range from 1 to 3. Acicular or lamellar fillers mostly have an L/D ratio greater 3, wherein this L/D ratio applies to two particle dimensions in the case of lamellar particles and to any particle dimension in the case of acicular particles. When L/D ratios are greater than 100, the term fibrous filler or fiber is generally used.

In terms of the present invention "particulate" or "particulate filler" means a component, additive and/or filler consisting essentially of particles having length to thickness ratio (L/D ratio) less than or equal to 100, preferably less than or equal to 20, more preferably less than or equal to 10. Typically, particulate fillers or particles includes particles having spheroidal, ellipsoid, acicular, lamellar and/or plate like forms.

In terms of the present invention "fiber", "reinforcing fiber", or "fibrous filler" means a component, additive and/or filler, consisting essentially of particles having an L/D ratio greater than 100.

Organic particulate filler B1

In a preferred embodiment the tribological additive B comprises or consists of at least one organic particulate filler B1, such as solid polymer particles, preferably having a L/D ratio of less than or equal to 20, more preferably less than or equal to 10. Typically, the polymer particles of the organic particulate filler B1 are not miscible with the polymer matrix A and form a solid disperse phase in the polymer matrix A.

In a preferred embodiment the organic particulate filler B1 is composed of spheroidal polymer particles having a L/D ratio in the range from 1 to 3. Typically, the organic particulate filler B1 is composed of polymer particles having a particle diameter, e.g. number averaged or volume averaged particle diameter, in the range of 1 to 100 μm, preferably 2 to 60 μm, more preferably 2 to 30 μm. For example, the organic particulate filler B1 is utilized in form of a micronized polymer powder. Typically, the number averaged particle diameter of the organic particulate filler B1, which is dispersed in the polymer A, is in the range of 1 to 100 μm, preferably 2 to 60 μm, more preferably 2 to 30 μm, in particular determined by electron microscopy, e.g. transmission electron microscopy (TEM), scanning electron microscopy (SEM) or reflection electron microscopy (REM).

Preferably, the organic particulate filler B1 is selected from solid polymer particles, essentially consisting of a polymer selected from polyphenylene sulfone (PPSU) (e.g. Ceramer® particles from Ceramer GmbH), fluoropolymers and perfluoropolymers, such as polytetrafluoroethylene (PTFE) (e.g. Polymist® PTFE from Solvay), perfluoroalkoxy alkane polymers (PFA) (e.g. Teflon®-PFA from DuPont or Dyneon®-PFA from Dyneon /3M), tetrafluoroethylene/ethylene copolymer (ETFE); and/or high molecular weight polyolefins (e.g. PE-HMW GHR® grades or PE-UHMW GUR® grades both available from Celanese).

Typically, high molecular weight polyolefins, e.g. polyethylene homopolymers and copolymers, exhibit an average molecular weight (calculated from intrinsic viscosity using Margolie equation) of at least 500,000 g/mol, preferably at least 800,000 g/mol, more preferably at least 1,000,000 g/mol; and particularly a density of at least 0.9 g/cm$^3$, preferably at least 0.93 g/cm$^3$. High molecular weight polyolefins, which can be used as organic particulate filler B1, are for example described in WO 2018/069838, US-B 5,482,987 and US-B 5,641,824. Typically, such high molecular weight polyolefins used as organic particulate filler B1 may be selected from high molecular weight polyethylene (PE-HMW) powders (such as GHR® grades from Celanese) exhibiting an average molecular weight of at least 500,000 mol/g, preferably of at least 800,000 g/mol; and from ultra-high molecular weight polyethylene (PE-UHMW) powders (such as GUR® grades from Celanese) exhibiting an average molecular weight of at least 3 x $10^6$ mol/g, preferably of at least 5 x $10^6$ g/mol. Further, suitable high molecular weight polyolefins also include so-called high-density polyethylene, wherein high-density polyethylene is for example an oxidized high-density polyethylene homopolymer, having a density of from about 0.9 to 1 g/cm$^3$, and particularly from about 0.95 to 0.99 g/cm$^3$.

In a more preferred embodiment the at least one tribological additive B comprises at least one organic particulate filler B1, wherein the organic particulate filler B1 is selected from polymer particles having a L/D ratio in the range from 1 to 3 and particle diameter in the range of 1 to 100 μm, preferably 2 to 60 μm, more preferably 2 to 30 μm, and wherein the polymer particles comprise or preferably essentially consist of a polymer selected from polyphenylene sulfone (PPSU), polytetrafluoroethylene (PTFE), perfluoroalkoxy alkane polymers (PFA), tetrafluoroethylene/ethylene copolymer (ETFE); and high molecular weight polyolefins, more preferably polytetrafluoroethylene (PTFE).

Inorganic particulate filler B2

In a preferred embodiment the tribological additive B comprises or consists of at least one inorganic particulate filler B2, preferably having a L/D ratio of less than or equal to 10, more preferably less than or equal to 3, typically in the range from 1 to 3.

Typically, the at least one inorganic particulate filler B2 can be selected from known fillers that can be used to improve tribological properties of polymer materials, e.g. hard abrasive particles, such as oxides, cubic boron nitride (BN) and ceramic particles; or known solid-state lubricants, such as graphite, molybdenum disulfide ($MoS_2$) and hexagonal boron nitride (BN). For example, suitable inorganic particulate fillers B2 are described in DE10329228A1, US 2013/0178565, and US 2005/0208313.

There is no particular restriction on the size of the particles of the inorganic particulate filler B2. The average particle diameter of B2 may be, for example, in the range from 5 nm to 100 μm, preferably 10 nm to 10 μm. Often it may be preferred to use the inorganic particulate filler B2 in form of nanoparticles, typically having an average particle diameter in the range of 10 to 1000 nm, preferably 50 to 1000 nm.

Typically, the average particle diameters relate to the weight averaged, volume averaged or number averaged particle diameter. For example, the particle sizes can be determined by means of dynamic light scattering (also known as

photon correlation spectroscopy or quasi-elastic light scattering), wherein typically the Z-averaged or volume averaged particle diameter is obtained. Also, the particle diameter can be determined via electron microscopy, e.g. scanning electron microscopy (SEM) or transmission electron microscopy (TEM), wherein typically the number averaged particle diameter is obtained.

Typically, the number averaged particle diameter of the inorganic particulate filler B2, which is dispersed in the polymer A, is in the range of 5 nm to 100 μm, preferably 10 nm to 10 μm, more preferably of 10 nm to 1000 nm, also preferably 50 nm to 1000 nm, in particular determined by electron microscopy, e.g. transmission electron microscopy (TEM), scanning electron microscopy (SEM) or reflection electron microscopy (REM).

Further, it is possible to utilize the inorganic particulate filler B2 as mentioned below in a surface treated form, e.g. surface treated with silane compounds.

For example, suitable inorganic particulate filler B2 may be selected from metals, metalloids (including e.g. C, B, Si, and Ge) and compounds thereof, such as oxides, nitrides, carbides, borides, chalcogenides (e.g. sulfides and selenides), halides (e.g. chlorides), phosphates, carbonates, silicates, zirconates, and aluminates.

In particular, the tribological additive B comprises at least one inorganic particulate filler B2 selected from:

- carbon fillers, such as graphite or partially graphitic carbon;
- metal and metalloid oxides, including hydrated oxides and hydroxides, such as zinc oxide ZnO, titanium dioxide $TiO_2$, silicon dioxide $SiO_2$ (e.g. fused silica, crystalline silica, natural silica, such as quartz, kieselguhr or silica sand, and various silane-coated silicas), tin dioxide $SnO_2$, cerium dioxide $CeO_2$, zirconium dioxide $ZrO_2$, aluminum oxide $Al_2O_3$ including aluminum hydroxide AlO(OH) (e.g. corundum, boehmite);
- metal and metalloid carbides, such as silicon carbide SiC, lithium carbide $Li_2C_2$, or boron carbide $B_4C$;
- metal and metalloid nitrides, such as boron nitride BN, silicon nitride $Si_3N_4$ and titanium nitride TiN;
- metal and metalloid borides, such as silicon borides $SiB_n$, e.g. $SiB_3$, $SiB_4$ and $SiB_6$;
- metal and metalloid sulfides, such as molybdenum disulfide, tantalum disulfide, tungsten disulfide, and zinc sulfide ZnS;
- metal and metalloid silicates; e.g. selected from aluminum silicates, magnesium silicates (e.g. vermiculite), and calcium silicates and metasilicates (e.g. wollastonite);
- metal and metalloid carbonates, such as calcium carbonate (e.g. chalk, limestone, marble and synthetic, precipitated calcium carbonates), and magnesium carbonate;
- metal and metalloid sulfates, such as calcium sulfate, e.g. its anhydride, dihydrate or trihydrate;
- metals and metalloid metals particles, such as molybdenum, platinum, palladium, nickel, aluminum, copper, alloys, and mixtures thereof, in particular copper nanoparticles, silver nanoparticles; and
- glass beads.

According to a preferred embodiment the tribological additive B comprises or consists of at least one inorganic particulate filler B2, which is selected from natural graphite, synthetic graphite, graphene, hexagonal boron nitride, cubic boron nitride, molybdenum disulfide, tungsten disulfide, silicon nitride, silicon carbide, boron carbide, copper nanoparticles, silver nanoparticles, silicon dioxide (e.g. fused silica, crystalline silica, natural silica), aluminum oxide, zinc oxide, titanium dioxide, cerium dioxide, zirconium dioxide, and calcium carbonate. More preferably, the at least one inorganic particulate filler B2 is selected from graphite, hexagonal boron nitride, molybdenum disulfide, silicon carbide, silicon dioxide, and aluminum oxide. Especially, the inorganic particulate filler B2 is selected from particles, in particular nanoparticles, in particular particles having a L/D ratio in the range of 1 to 3, essentially consisting of the compounds listed before.

Reinforcing fiber B3

In a preferred embodiment the tribological additive B comprises or consists of at least one reinforcing fiber B3, typically having a L/D ratio of more than 100.

Generally, the reinforcing fiber B3 can be selected form short fibers and long fibers, wherein typically the average fiber length of short fibers is in the range from 0.1 to 1 mm, and typically the average fiber length of long fibers is in the range from >1 to 50 mm. The average fiber length of the fibers present in the finished polymer composition can in particular alter as a consequence of the steps in the process (e.g. extrusion).

Typically, the reinforcing fiber B3 can be selected from commonly known reinforcing fibers, including inorganic reinforcing fibers, such as carbon fibers, boron fibers, glass fibers, silicate fibers , silica fibers, mineral fibers, ceramic fibers, and basalt fibers; organic polymer reinforcing fibers, such as polyimide fibers, aramid fibers, polyester fibers, nylon fibers, and polyethylene fibers; and natural fibers, such as wood fibers, flax fibers, hemp fibers, and sisal fibers.

Suitable reinforcing fibers B3 include, for example, glass fibers, such as E, A, C, ECR, R, S, D, and NE glasses and quartz, milled glass fiber, chopped glass fiber, and long glass fiber. Other suitable inorganic reinforcing fibers B3

include single crystal fibers or whiskers made of silicon carbide, aluminum dioxide, boron carbide, silicon carbide, silicon nitride, graphite, iron, nickel, or copper. Other suitable inorganic reinforcing fibers B3 include carbon fibers, stainless steel fibers, metal coated fibers, and the like.

In particular, suitable reinforcing fibers B3 may include organic polymer reinforcing fibers, for example selected from polyimide fibers (e.g. P84® from Evonik Fibres), polyamide fibers, including for example nylon fibers (e.g. nylon 6; nylon 6,6; nylon 12; 10) and aramid fibers (e.g. Kevlar®, which is commercially available from E. I. duPont de Nemours), thermoplastic polyester fibers (e.g. polyethylene terephthalate and polybutylene terephthalate), fibers formed from acrylic polymers (e.g. polyacrylonitriles having at least about 35% by weight acrylonitrile units, which can be copolymerized with other vinyl monomers such as vinyl acetate, vinyl chloride, styrene, vinylpyridine, acrylic esters or acrylamide), polyolefin fibers (e.g. comprising at least 85% by weight of ethylene, propylene, or other olefins), fibers formed from polyvinyl chloride, polyvinylidene chloride, polytetrafluoroethylene, polyvinyl alcohol, polyether sulfones, polyphenyl sulfones, polyetherketones, polyphenylene oxides, polyphenylene sulfides or polyacetals. Typical organic polymer reinforcing fibers are for example described in US-B 9,994,670. Typically, reinforcing fibers B3 may be provided in the form of monofilament or multifilament fibers and can be used either alone or in combination with other types of fibers, for example, through co-weaving.

According to a preferred embodiment the at least one reinforcing fiber B3 is selected from polyimide fibers (e.g. P84® from Evonik Fibres), aramid fibers (e.g. fibers or filaments Kevlar® from Du Pont), carbon fibers (e.g. carbon fibers or filaments Sigrafil® from SGL Carbon Group), and mineral fibers (e.g. aluminum-silicate fibers, calcium-silicate fibers, calcium-magnesium-silicate fibers, calcium-magnesium-zircon-silicate fibers).

Further, the reinforcing fiber B3 may be completely or partly surface-treated, for example treated with silane compounds, polyurethane, aromatic polymer, epoxy resins, or glycerol with the aim of, for example, improving fiber properties or increasing compatibility with the polymer matrix A. Typically, the surface treatment content can be in the range from 0.1 to 10% by weight, based on the reinforcing fiber B3.

In a preferred embodiment the at least one tribological additive B is selected from polytetrafluoroethylene (PTFE) particles, graphite (e.g. natural graphite and/or synthetic graphite), boron nitride (BN) (e.g. hexagonal boron nitride), molybdenum disulfide ($MoS_2$), tungsten disulfide ($WS_2$), silicon nitride ($Si_3N_4$), silicon carbide (SiC), boron carbide ($B_4C$), calcium carbonate ($CaCO_3$), titanium dioxide ($TiO_2$), silicon dioxide ($SiO_2$), cerium dioxide ($CeO_2$), aluminum oxide ($Al_2O_3$), copper particles (in particular copper nanoparticles), silver particles (in particular silver nano particles), carbon fibers, glass fibers, and aramid fibers.

More preferably, the at least one tribological additive B is selected from polytetrafluoroethylene (PTFE) particles, graphite (e.g. natural graphite and/or synthetic graphite), boron nitride (BN) (e.g. hexagonal boron nitride), molybdenum disulfide ($MoS_2$), silicon carbide (SiC), carbon fibers, and aramid fibers.

Optional lubricant C

In a preferred embodiment, the polymer composition comprises at least one lubricant C, preferably in an amount of 0.1 to 5 wt.-%, more preferably 0.5 to 3 wt.-%, more preferably 0.6 to 2 wt.-%, based on the total polymer composition. Preferably, silicon oil is used as lubricant C.

Preferably, the at least one lubricant C is selected from liquid lubricants, such as silicon oil, waxes, such as polyolefine waxes, polyethylenglycol waxes, and other commonly known lubricants, such as fatty acids, fatty alcohols, fatty acid esters, and fatty acid amides. For example, conventional lubricants are described in R. Gächter, H. Müller, Kunststoffadditive, 3. Ed., page 443 seqq, Hauser Verlag.

Typically, fatty acids and fatty acid derivates suitable as lubricant C are based on saturated or unsaturated carboxylic acids having 8 to 40, preferably 10 to 40, more preferably 16 to 22 carbon atoms, e.g. capric acid, palmitic acid, lauric acid, stearic acid, montanic acid, and behenic acid. For example, the at least one lubricant C may include fatty acid esters and/or fatty acid amides obtained from aliphatic saturated mono to tetra functional alcohols or amines having 2 to 40, preferably 2 to 6 carbon atoms, e.g. n-butanol, n-octanol, stearyl alcohol, ethylene glycol, propylene glycol, neopentyl glycol, pentaerythritol, stearyl amine, ethylene diamine, propylene diamine, hexamethylene diamine, di-(6-aminohexyl) amine. Preferably, the at least one lubricant C may include glyceryl distearate, glyceryl tristearate, ethylene bistearamide (EBS), glyceryl monopalmitate, glyceryl trilaurate, glyceryl monobehenate und pentaerythritol tetrastearate.

Further, the at least one lubricant C may include one or more polyethylene glycol and/or copolymers of ethylene oxide and propylene oxide, typically having a molecular weight in the range of 1000 bis 15000 g/mol.

According to a preferred embodiment, the polymer composition comprises 0.1 to 5 wt.-%, more preferably 0.5 to 3 wt.-%, more preferably 0.6 to 2 wt.-%, based on the total polymer composition, of at least one lubricant C, wherein the lubricant C is selected from silicon oil (i.e. liquid oligomeric or polymeric siloxane with organic side chains, e.g. polydimethylsiloxane). Preferably, the silicon oil exhibits a viscosity in the range from 5,000 to 100,000 mPas. The silicon oil may be used in form of a masterbatch, e.g. ACCUREL® Si 755 from Evonik.

Optional further component D

Optionally, the inventive polymer composition may comprise one or more further components D, preferably selected from conventional auxiliaries and additives, for example selected from crosslinking agents, thermal stabilizers, light stabilizes, UV stabilizers, UV absorbers, antioxidants, plasticizers, processing aids, viscosity improvers, flameproofing agents, impact modifiers, scattering particles, soluble or insoluble dyes, pigments, antimicrobial agents and the like. Particularly, the properties of the inventive polymer composition are not adversely affected by these additives and/or specific properties, such as optical appearance, weather, heat or chemical resistance, of the polymer composition respectively of formed articles produced thereof may be improved. Preferably, the inventive polymer composition comprises at least one further component D, selected from crosslinking agents, thermal stabilizers, and UV absorbers.

Typically, the further component D may be present in an amount of up to 30 wt.-%, preferably up to 20 wt.-%, more preferably up to 10 wt.-%, also preferably up to 5 wt.-%, based on the total weight of the polymer composition. Typically, the further component D may be present in an amount of 0.0001 to 20.0 wt.-%, also preferably 0.001 to 10.0 wt.-%, also preferably 0.0001 to 2.0 wt.-%, based on the total polymer composition.

In a particular preferred embodiment, the inventive polymer composition comprises at least one crosslinking agent, which is capable of crosslinking the polymer chains (e.g. of the poly(meth)acrylimide) and to produce a crosslinked polymer matrix A. Suitable crosslinking agents include those, that can form free radicals under radiation, in particular under beta or gamma radiation, and thus improves optional crosslinking of the polymer material via radiation exposure, e.g. by beta radiation, gamma radiation or e-beam radiation. Such crosslinking agent are for example described in WO 2007/106074 A2.

Typically, the at least one crosslinking agent comprises two or more unsaturated groups including olefinic groups. Suitable unsaturated groups include (meth)acrylic groups (also referred to as (meth)acryloyl or (meth)acrylyl), vinyl, allyl, and the like. Preferably, the crosslinking agent may be selected from bifunctional (meth)acrylates, tri- or multifunctional (meth)acrylates, and other known crosslinkers, such as allyl methacrylate, allyl acrylate, and divinylbenzenes. Exemplary polyallylic compounds useful as crosslinking agents include those compounds comprising two or more allylic groups, for example, triallylisocyanurate (TAIC), triallylcyanurate (TAC), and combinations thereof.

Further, the crosslinking agents preferably include multifunctional (meth)acrylates, which are selected from esters of (meth)acrylic acid and a polyfunctional alcohol, typically selected from aliphatic diols, triols and/or tetraols containing 2-100 carbon atoms, e.g. propane diol, butane diol, hexane diol, octane diol, nonane diol, decane diol, eicosane diol, ethylene glycol, diethylene glycol, triethylene glycol, tetraethylene glycol, dodecaethylene glycol, tetradecaethylene glycol, propylene glycol, dipropyl glycol, tetradecapropylene glycol, trimethylolpropane pentaerythritol. Examples of suitable multifunctional (meth)acrylates are ethyleneglycol diacrylate, 1,6-hexanediol diacrylate, neopentylglycol di(meth)acrylate, ethyleneglycol dimethacrylate (EDMA), polyethyleneglycol di(meth)acrylates, polypropyleneglycol di(meth)acrylates, polybutyleneglycol di(meth)acrylates, 2,2-bis(4-(meth)acryloxyethoxyphenyl) propane, 2,2-bis(4-(meth)acryloxydiethoxyphenyl) propane, pentaerythritol tri(meth)acrylate, pentaerythritol tetra(meth)acrylate, dipentaerythritol penta(meth)acrylate, dipentaerythritol hexa(meth)acrylate, trimethylolpropane trimethacrylate, trimethylolpropane triacrylate (TMPTA), di(trimethylolpropane) tetra(meth)acrylate, and combinations thereof. Also included are N,N'-alkylene-bis-acrylamides.

Typically, the inventive polymer composition may comprise 0.01 to 20 wt.-%, specifically 0.1 to 15 wt.-%, more specifically 1 to 10 wt.-%, and even more specifically 2 to 7 wt.-%, based on the total weight of the polymer composition, at least one crosslinking agent, preferably selected from triallylisocyanurate (TAIC), triallylcyanurate (TAC), ethyleneglycol dimethacrylate (EDMA), 1,4-butanediol dimethacrylate, divinylbenzene, and allyl (meth)acrylate. More preferably, the crosslinking agent is selected from allyl (meth)acrylate, triallylisocyanurate (TAIC) and/or triallylcyanurate (TAC).

In one embodiment, the inventive polymer composition may further comprise one or more thermal stabilizers as component E. Thermal stabilisers as such are known to the skilled person and are described inter alia in Kunststoff-Handbuch, Bd. IX, S. 398, Carl-Hanser-Verlag, 1975. Examples of commonly used thermal stabilisers include but are not limited to p-methoxyphenylethacrylamide, diphenylmethacrylamide, sodium dodecyl phosphate, disodium monooctadecyl phosphate, disodium mono(3,6-dioxyoctadecyl)phosphate and alkylamino salts of mono- and dialkyl-substituted phosphoric acids described in WO 2005/021631 A1.

Typically, such thermal stabilizers may be present in an amount of 0.0001 to 2 wt.-%, especially 0.001 to 1.0 wt.-%, based on the weight of the polymer composition.

Further, the optional further component D may include commonly known light or UV stabilizers, such as UV absorbers, antioxidants and/or free radical scavengers, for example selected from benzophenone derivate UV absorbers, in particular hydroxyphenylbenztriazole derivatives (such as 2-(2'-hydroxy-5'-methylphenyl)benzotriazole, commercially available as Tinuvin® P, from BASF SE or 2-(2'-hydroxy-3'-dodecyl-5'-methyl-decyl)benzotriazole);oxanilide UV absorbers (such as N-(2-ethoxyphenyl)-N'-(2-ethylphenyl) ethanediamide, commercially available as Tinuvin® 312 from BASF SE), sterically hindered amine stabilizers (HALS) (such as bis(2,2,6,6-tetramethyl-4-piperidyl) sebacate, 8-acetyl-3-dodecyl-7,7,9,9-tetramethyl-1,3-8-triazaspiro(4,5)decane-2,5-dione, bis(2,2,6,6-tetramethyl-4-piperidyl)succinate,

poly(N-ß-hydroxyethyl-2,2,6,6-tetramethyl-4-hydroxypiperidine succinic acid ester) and bis(N-methyl-2,2,6,6-tetramethyl-4-piperidyl) sebacate); and phenolic antioxidants (such as octadecyl 3-(3,5-di-*tert*.-butyl-4-hydroxyphenyl)propionate, commercially available as Irganox® 1076 from BASF SE). Preferably, commonly known UV absorbers are used as UV stabilizers, if needed.

Typically, such light or UV stabilizers may be present in an amount of 0.01 to 1.5 wt.-%, especially 0.02 to 1.0 wt.-%, based on the weight of the polymer composition.

Process for producing the polymer composition

Furthermore, the present invention is directed to a process for producing the inventive polymer composition as described above, wherein the process comprises mixing the polymer matrix A and the at least one tribological additive B, and optionally further components C and/or D.

The preferred embodiments and the description of the components A, B, and optionally C and D, as mentioned in connection with the inventive polymer compositions, apply to the inventive process accordingly.

The mixing is typically carried out using methods known per se, for example by processing via the elastoviscous or molten state, i.e. by kneading, rolling, calendering, extrusion, injection molding, pressing, sintering or other suitable processes. Preferably, the mixing of the components takes place via heating, preferably via melting, the polymer matrix A and adding the tribological additive B and optionally the lubricant C and/or optionally one or more further components D. Preferably, the mixing is carried out at a temperature in the range from 150 to 350° C, in particular from 200 to 300° C.

It is also possible to begin by mixing the at least one tribological additive B and the optional lubricant C and/or optional further component D and afterwards add this mixture to the molten polymer matrix A. Furthermore, the inventive polymer composition can be prepared by dry blending the polymer matrix A with the tribological additive B, and optionally further components C and/or D, and typically melting the mixture afterwards, wherein the polymer matrix A with the tribological additive B are typically present as powder, particles or granulates.

Preferably, the polymer composition is produced via extrusion, typically utilizing a melt temperature in the range from 200 to 350° C, in particular from 250 to 300° C. Conventional mixing devices, such as single-screw or multiscrew extruders or extruders with an oscillating screw and optionally additionally with shear pins may be used.

Preferably, the polymer composition may be obtained in form of a powder, a granulate, or a semi-finished product, such as sheet, film, profile or bar.

Formed article

In another aspect the present invention is directed to a formed article made of the inventive polymer composition as described above. The formed article may be obtained from the inventive polymer composition via a process as described below. Particularly, the formed article is a molded article, prepared via injection molding, or a semi-finished article, prepared via extrusion, in particular selected from sheets, films, or bars.

The preferred embodiments and the description of the components A, B, and optionally C and D, as mentioned in connection with the inventive polymer compositions, apply to the inventive formed article accordingly.

Preferably, the inventive formed article is involved in tribological applications where it has to withstand relatively high mechanical load and often also high thermal load. Generally, the formed articles may involve household items, household devices, electronic components, garden devices, medical-technology devices, motor-vehicle components, bodywork parts, parts of conveying systems or parts of manufacturing machines.

The inventive formed articles can in particular be used in the transport and mobility area, such as automotive area, railway vehicle area, or aircraft area; and in industrial applications. In particular, the inventive formed article may involve any movable part utilized in said areas. For example, the inventive formed article may be utilized in or in form of pump casings, pump parts (e.g. of oil pumps), transmission control equipment, chain guides, sliding bearings, ball bearings, sliding shoes, gear wheels, gear drives, rolls, pistons, piston rings, piston rods, clutches, brakes, seals, membranes, fittings, bushings, casings, valve casings, or valve parts.

The present invention also provides the use of an inventive polymer composition described above for producing a formed article for use in vehicle construction, in particular automobile construction (e.g. in the form of oil pump, transmission control system, oil regulation piston, or casing), in the food-and-drink and household sector (e.g. in the form of microwave tableware or a coating); in the construction of apparatus (e.g. in the form of pump component, seals, protective covers, casings, or filter membrane), or in heating systems and sanitary systems (e.g. in hot-water meters, rotors in heating-system circulation pumps, internal parts of fittings), in medical technology, or in electronics.

Process for producing the formed article

In another aspect the present invention is directed to a process for producing a formed article from the inventive polymer composition, preferably via injection molding or extrusion. Generally, the process for producing the formed article from the inventive polymer composition may include one or more steps selected from commonly known processes, such

as injection molding, extruding, casting, thermoforming, pressing, sintering, rolling, calendering, or other shaping processes. No limits are placed on the configuration of the formed body.

Further, it is possible to produce the formed article from the inventive polymer composition via a process of additive manufacturing, such as selective laser melting (SLM), selective laser sintering (SLS), and fused deposition modeling (FDM).

Preferably, the formed article is produced including a thermally forming step, preferably at a temperature in the range from 150 to 350° C, in particular from 200 to 300° C.

Preferably, the formed article is produced from the inventive polymer composition via injection molding utilizing a melt temperature in the range from 200 to 350° C, in particular from 250 to 300° C; and a mold temperature in the range from 100 to 150° C, in particular from 110 to 140° C.

In particular, it is possible to add at least one commonly known auxiliary and/or additive, for example selected from lubricant C and further component D, in particular selected from crosslinking agents and demolding agents, before or during the step of producing the formed article, e.g. via injection molding or extrusion. In particular, at least one demolding agent, selected from the lubricant C, as described above, or talcum is added in the step of producing the formed article preferably in an amount of 0.1 to 0.5 wt.-%, based on the total polymer composition. In particular, at least one crosslinking agent, described as further component D above, is added in the step of producing the formed article, preferably in an amount as described above.

Preferably, the inventive polymer composition, e.g. in form of powder or granulate, is dried before it is processed in the process for producing the formed article, e.g. before injection molding. Typically, said drying is carried out at a temperature in the range of 100 to 150 °C, preferably 110 to 130 °C, using commonly known devices. Typically, the water content is reduced in said optional drying step to at least 0.5 wt.%, preferably to at least 0.1 wt.-%, based on the total polymer.

In a preferred embodiment the process for producing a formed article from the inventive polymer composition encompasses at least one step of crosslinking by exposing the polymer composition, preferably in form of the formed article, to radiation, preferably high energetic radiation, more preferably radiation selected from beta radiation, gamma radiation, electron beam, x-ray radiation, , and UV/Vis radiation (i.e. by photocrosslinking). The crosslinking by exposure with beta radiation, especially $\beta^-$ radiation (electron emission), or electron beam, is preferred.

It is described in the state of the art that exposure to high energetic radiation, such as gamma radiation or beta radiation, induces cross-linking in the polymer material, e.g. polyethylene, polypropylene, and polyamides, and may improve the wear resistance of the material (e.g. WO 2007/106074 A2). This is often used for polymer material suitable for implants (see e.g. WO 98/01085 A1). Generally, the term "gamma radiation" or "gamma ray" refers to electromagnetic radiation having a quantum energy of equal or more than 200 keV. Generally, the term "beta radiation" or "beta ray" refers to high-speed electron ($\beta^-$ radiation) or positron ($\beta^+$ radiation) emitted by the radioactive decay of an atomic nucleus during the process of beta decay.

Typically, the formed article is exposed to beta radiation especially $\beta^-$ radiation, or electron beam in the solid stage after its production. Further, it is possible to expose the polymer composition, preferably in solid stage, after its production, preferably in form of a semi-finished product (e.g. sheet, film, or bar) or in form of an injection molded product. Typically, the exposure to radiation may be followed by a thermal treatment, such as re-melting or annealing, in particular to reduce the amounts of free radicals.

Preferably, the crosslinking by exposure to gamma radiation is carried out using a polymer composition or a formed article comprising at least one crosslinking additive as described above.

Process for coating

The inventive polymer composition may also be used for coating applications, in particular coatings on tribological systems, e.g. roll coatings, piston coatings. In this context the invention relates to a process of coating at least one part of a substrate material selected from metals, ceramics and plastics. The process of coating may be carried out using commonly known methods, such as thermal spraying, casting, film molding, spin coating.

Description of the figure

Figure 1 shows the preparation of test pins from a standard tension rod (left picture) and the tribological testing using a pin-on-disc apparatus (right picture).

The invention is illustrated in more detail hereinafter using experimental examples and if appropriate comparative examples.

Examples

a. Components of polymer compositions

A1: Polymethyl methacrylimide (PMMI), prepared by reaction of polymethylmethacrylate with methylamine via reactive extrusion, wherein the polymer-analogous reaction, specifically the imidation, was carried out on a reactive extrusion system consisting of a reactive extruder with a highly effective mixing part and a vented extruder with two venting zones and attached vacuum lines. 10 kg per hour of a PMMA molding material were introduced into the reactive extruder. In the first part of the mixing zone, there is a feed point for liquids. 3000 g of methylamine per h were fed into this feed point as the reaction medium. The mean reaction time was 5 minutes at a temperature of 250°C. On completion of the reaction, the reaction mixture was decompressed in the vented extruder, the gaseous and volatile fractions were removed, and finally extrudates were made, cooled and cut to granules. The obtained PMMI A1 comprises about 90 wt.-% of unit according to formula I with $R^1$, $R^2$ and $R^3$ being methyl. The PMMI A1 exhibits a melt volume rate (MVR) of about 1.7 $cm^3$/10 min, determined according to ISO 1133, at 260 °C using 10 kg load, and a Vicat softening temperature of about 170 °C, determined according to ISO 306 (B/50).
A2 Polyetheretherketone PEEK, extruded rod made of Victrex® PEEK 450G (comparative material)
B1: POLYMIST® F5A, Solvay, polytetrafluoroethylene (PTFE) as tribological additive B1.
C1: ACCUREL® Si755, from Evonik, 50 wt-% silicone oil based in polyamide PA6 as lubricant C.

b. Preparation of polymer compositions and test specimens

The compounding of the polymer compositions as given in table 1 was carried out on a co-rotating twin screw extruder (ZSK30) at a temperature in the range of 220 °C to 285 °C and a screw rotational speed of about 200 $min^{-1}$. The raw materials were dried before extrusion so that a water content of less than 0.1 wt.-% was obtained. It was found that the melt is foaming at the nozzle outlet without pre-drying. A cooling metal plate was used for pelletizing. The pelletizer was cooled with compressed air.

Table 1: PMMI polymer compositions and comparative material

| Ex | A1 | A2 | B1 | C1 |
|---|---|---|---|---|
| | wt.-% | wt.-% | wt.-% | wt.-% |
| 1* | 100 | - | 0 | 0 |
| 2 | 80 | - | 20 | 0 |
| 3 | 78 | - | 20 | 2 |
| 4 | 90 | - | 10 | 0 |
| 5 | 88 | - | 10 | 2 |
| 9* | - | 100 | - | - |
| * Comparative example | | | | |

The polymer granulates obtained according to examples 1 to 5 were formed into tension rods according to DIN EN ISO 527, Typ 1A via injection molding. The injection molding was carried out using a Battenfeld 350 CD injection molding machine (melt temperature 285 °C/ mold temperature 120 °C). Talcum was added (about 10 g talcum to 3000 g polymer granulate) to the polymer granulate, if necessary.

c. Radiation cross-linking

The PMMI materials similar to examples 2 and 3 were additionally equipped with 10 wt% of an additive for radiation crosslinking. Said radiation crosslinking additive was trimethylol-propane tri-methacrylate (TMPTMA) with low-density polyethylene (LDPE) as carrier material (35 wt% TMPTMA, 65 wt% LDPE).

Polymer granulates and tension rods of the following PMMI materials (summarized in Table 1A) were prepared as described above. These tension rods were exposed to electron beam irradiation, wherein the total radiation dose was 100 kGy, divided into three doses with 33,3 kGy each (Examples 7 and 8).

Table 1A: PMMI polymer compositions for radiation

| Ex | A1 | B1 | C1 | TMPTMA in LDPE |
|---|---|---|---|---|
| | wt.-% | wt.-% | wt.-% | wt.-% |
| 7 | 72 | 18 | 0 | 10 |
| 8 | 70.5 | 17.5 | 2 | 10 |

d. Testing and Results

The tribological properties were evaluated using a pin-on-disc test setting following DIN ISO 7148-2 (2014), as illustrated in figure 1. The pin-on-disc tribological tests were carried out using a disc (outer diameter = 110 mm, inner diameter = 75 mm, thickness = 7 mm) of hardened steel (100 Cr6) as sliding partner, wherein the following parameters were utilized: contact pressure p = 4 $N/mm^2$; sliding speed v = 0.5 m/s; an average surface roughness of sliding partner (disc) $R_z$ = 1.5 μm. Test pins (4 mm x 4 mm x 7 mm) were prepared from the tension rods according to DIN EN ISO 527, Typ 1A (see figure 1). Test pins (4 mm x 4 mm x 7 mm) of PEEK comparative material A2 were milled out of the rod.

In the first test setting the tribological tests were carried out at ambient temperature of 23 °C without adjusting temperature of steel disc (table 2). In the second test setting the temperature of the steel disc was adjusted to 100 °C or 150 °C (table 3). The tribological pin-on-disc testing was carried out without external lubrication (dry).

The results for comparative materials polyethylene (PE), polyamide (PA), and polyoxymethylene (POM) were taken from literature, wherein similar pin-on-disc test setting were described. Further, in comparative example 9 commercially available tribological polyetheretherketone PEEK (material A2) was used.

Typical indicators for assessment of tribological properties are the coefficient of friction μ and the wear coefficient k (also referred to as k-factor) The coefficient of friction μ also represents a value for the fraction heat dissipated in the system. The wear coefficient k indicates the material loss and represents the material loss depending on glide path and contact pressure. Further, the friction-induced temperature rise was measured and given as $T_{FR.}$

The coefficient of friction μ (also referred to as sliding friction coefficient or friction coefficent) is dimensionless and given as ratio of friction force $F_R$ to normal force $F_N$:

$$\mu = F_R/F_N$$

The wear coefficient (k-factor) k in $mm^3/(N\ m)$ is given as:

$$k = \Delta l / (p \cdot v \cdot \Delta t)$$

with

Δl linear wear in mm observed in the time interval Δt in s
p contact pressure in $N/mm^2$
v sliding speed in m/s

The test results were summarized in following tables 2 and 3, wherein the standard deviation Δ of the measured values are given.

Table 2: Tribological results (pin disc system, p = 4 $N/mm^2$, v = 0,5 m/s, $R_z$ = 1,5 μm, ambient temperature, 23 °C)

| Material | $T_{FR}$ | Δ $T_{FR}$ | k | Δk | μ | Δμ |
|---|---|---|---|---|---|---|
| | °C | | $10^{-6}$ $mm^3/(N\ m)$ | | - | |
| Ex. 1* | 70 | 9 | 6373 | 1315 | 0.40 | 0.021 |
| Ex. 2 | 36 | 3 | 3.50 | 0.37 | 0.19 | 0.004 |
| Ex. 3 | 31 | 2 | 66.2 | 11.7 | 0.22 | 0.011 |
| Ex. 7*** | 38 | 3 | 12.1 | 6.7 | 0.04 | 0.007 |
| Ex. 8*** | 31 | 1 | 67.1 | 13.9 | 0.04 | 0.005 |
| Ex. 9* (PEEK) | 75 | 2 | 11.5 | 0.45 | 0.06 | 0.006 |

(continued)

| Material | $T_{FR}$ | $\Delta T_{FR}$ | k | $\Delta k$ | $\mu$ | $\Delta\mu$ |
|---|---|---|---|---|---|---|
| | °C | | $10^{-6}$ mm³/(N m) | | - | |
| PE** | n. a. | n. a. | 40 | 8 | 0.3 | 0.05 |
| POM** | n. a. | n. a. | 15 | 1 | 0.4 | 0.05 |
| PA 66** $R_z$=3,2 $\mu$m | n. a. | n. a. | 9.8 | 1.8 | 0.55 | 0.05 |

* Comparative example
** Comparative benchmark materials, wherein the results were taken from Künkel, R., *"Auswahl und Optimierung von Kunststoffen für tribologisch beanspruchte Systeme",* Dissertation FAU Erlangen, 2005. The values from pin-on-disc testing utilizing test conditions are similar as described above, differences are mentioned
*** Subsequently subjected to electron beam irradiation for cross-linking (total dose = 100 kGy)

Table 3: Tribological results (pin disc system, p = 4 N/mm², v = 0,5 m/s, $R_z$ = 1,5 $\mu$m)

| Material | T | $T_{FR}$ | $\Delta T_{FR}$ | k | $\Delta k$ | $\mu$ | $\Delta\mu$ |
|---|---|---|---|---|---|---|---|
| | °C | °C | | $10^{6}$ mm³/(N m) | | - | |
| Ex. 1* | 100 | 120 | 10 | 7750 | 340 | 0.47 | 0.02 |
| Ex. 2 | 100 | 85 | 4 | 1.9 | 0.7 | 0.13 | 0.01 |
| Ex. 3 | 100 | 85 | 6 | 0.6 | 0.4 | 0.15 | 0.01 |
| Ex. 7*** | 100 | 90 | 3 | 1.14 | 0.43 | 0.16 | 0.006 |
| Ex. 8*** | 100 | 82 | 3 | 1.04 | 0.30 | 0.16 | 0.015 |
| Ex. 9* (PEEK) | 100 | 108 | 4 | 17.1 | 1.5 | 0.41 | 0.015 |
| Ex. 2 | 150 | 140 | 4 | 0.75 | 0.16 | 0.15 | 0.006 |
| Ex. 3 | 150 | 139 | 9 | 1.07 | 0.26 | 0.16 | 0.025 |
| Ex. 9* | 150 | 179 | 8 | 40.3 | 6.7 | 0.41 | 0.021 |
| POM** | 80 | n. a. | n. a. | 5.7 | 1.9 | 0.60 | 0.17 |
| PA 66** $R_z$=3,2 $\mu$m | 80 | n. a. | n. a. | 8.6 | 2.7 | 0.70 | 0.15 |

* Comparative example
** Comparative benchmark materials, wherein the results were taken from literature. The values from pin-on-disc testing utilizing test conditions are similar as described above, differences are mentioned. Results for POM and PA were taken from Künkel, R., Auswahl und Optimierung von Kunststoffen für tribologisch beanspruchte Systeme, Dissertation FAU Erlangen, 2005.
*** Subsequently subjected to electron beam irradiation for cross-linking (total dose = 100 kGy)

It was found that the inventive polymer composition according to examples 2 (80 PMMI / 20 PTFE) and 3 (78 PMMI / 20 PTFE/ 2 ACCUREL® Si755) showed improved or similar performance than the comparative systems PE, PA, POM and even tested PEEK standard material (example 9) at ambient temperature (23 °C). Here specific wear rate < $4 \cdot 10^{-6}$ mm³/(N m) and friction coefficient of ~ 0,2 were observed for the inventive material.

The tribological properties of inventive polymer compositions were very even more improved at elevated temperatures (100 °C or 150 °C). Here typical wear rates < 1 - $2 \cdot 10^{-6}$ mm³/(N m) and fiction coefficients < 0,15 were observed for the inventive polymer compositions, which are significantly lower than the values of the benchmark comparative systems and tested PEEK standard material (example 9).

The e-beam radiation results in improvement of friction coefficient $\mu$ (examples 7 and 8 compared to examples 2 and 3) at ambient temperature and improvement of wear rate k at elevated temperatures (example 7 compared to example 2).

Furthermore, mechanical properties were determined using 5 tension rods for each test, after condition at 23 °C, 50 % relative humidity:

- elongation at break, tensile modulus, and tensile strength (ultimate tensile strength or tensile strength at break), all according to ISO 527-1:2012
- Charpy impact strength according to ISO 179, and
- Charpy notch impact strength according to ISO 179 1eA.

The results are summarized in table 4.

Table 4: Results of mechanical testing

| Ex | Elongation at break | Tensile modulus | Tensile strength at break | Charpy | Charpy notched |
|---|---|---|---|---|---|
| | % | MPa | MPa | kJ/m$^2$ | kJ/m$^2$ |
| 1* | 3.0 | 4000 | 80.0 | 20.0 | - |
| 2 | 2.6 | 3751 | 62.1 | 22.0 | 1.4 |
| 3 | 3.7 | 3557 | 46.9 | 15.0 | 1.7 |
| 4 | 2.7 | 3946 | 68.1 | 26.4 | 1.5 |
| 5 | 4.4 | 3832 | 55.0 | 20.2 | 1.5 |

## Claims

1. Polymer composition for tribological applications comprising a polymer matrix A, which comprises at least on one poly(meth)acrylimide, and at least one tribological additive B, selected from organic particulate fillers B1, inorganic particulate fillers B2 and reinforcing fibers B3, wherein the at least one poly(meth)acrylimide comprises:

   i) from 1 to 95 wt.-%, preferably from 20 to 92 wt.-%, based on the total weight of the poly(meth)acrylimide, units of formula I

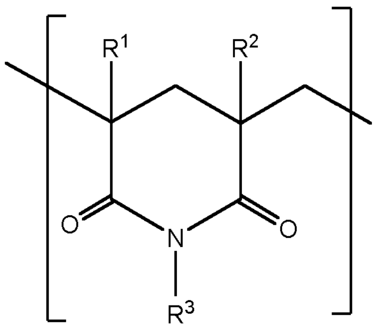

(I);

   ii) from 1 to 70 wt.-%, preferably from 2 to 60 wt.-%, based on the total weight of the poly(meth)acrylimide, units of formula II

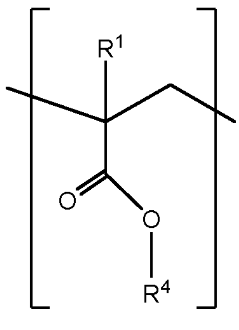

(II);

   iii) from 1 to 20 wt.-%, preferably from 1 to 12 wt.-%, based on the total weight of the poly(meth)acrylimide, units of formula III

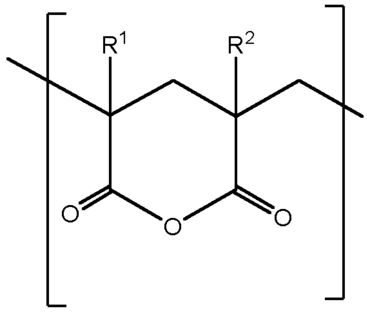

(III);

and

iv) from 0 to 15 wt.-%, preferably from 0 to 10 wt.-%, based on the total weight of the poly(meth)acrylimide, units of formula IV

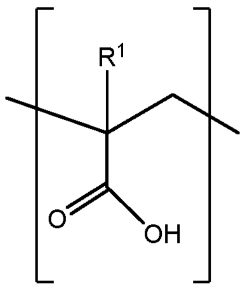

(IV),

wherein

$R^1$ and $R^2$ are, independently from each other, hydrogen or $C_1$-$C_6$ alkyl, preferably hydrogen or methyl;
$R^3$ is hydrogen, $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen; and
$R^4$ is $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen.

2. Polymer composition according to claim 1, comprising, in each case based on the total weight of the polymer composition:

from 50 to 97 wt.-%, preferably 60 to 95 wt.-%, of the polymer matrix A;
from 3 to 30 wt.-%, preferably 5 to 25 wt.-%, of the at least one tribological additive B;
from 0 to 5 wt.-%, preferably 0 to 3 wt.-%, of at least one lubricant C;
from 0 to 20 wt.-%, preferably 0 to 10 wt.-%, of one or more further component D.

3. Polymer composition according to claim 1 or 2, wherein the polymer matrix A comprises at least 50 wt.-%, based on the polymer matrix A, of the at least one poly(meth)acrylimide.

4. Polymer composition according to any of claims 1 to 3, wherein the at least one poly(meth)acrylimide comprises at least at least 5 wt.-%, preferably at least 15 wt.-%, more preferably at least 60 wt.-%, based on the total poly(meth) acrylimide, units of formula (I)

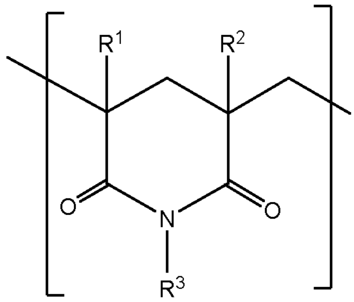

(I),

in which

$R^1$ and $R^2$ are, independently from each other, hydrogen or $C_1$-$C_6$ alkyl, preferably hydrogen or methyl; and $R^3$ is hydrogen, $C_1$-$C_{18}$-alkyl, $C_5$-$C_8$-cycloalkyl, $C_6$-$C_{10}$-aryl, or $C_6$-$C_{10}$-aryl-$C_1$-$C_4$-alkyl, where these radicals may be up to trisubstituted by radicals selected from the group consisting of $C_1$-$C_4$-alkyl, $C_1$-$C_4$-alkoxy and halogen.

**5.** Polymer composition according to any of Claim 1 to 4, wherein $R^1$, $R^2$, $R^3$ and $R^4$ are methyl.

**6.** Polymer composition according to any of Claims 1 to 5, wherein the at least one tribological additive B comprises at least one organic particulate filler B1, wherein the organic particulate filler B1 is selected from polymer particles having a L/D ratio in the range from 1 to 3 and a particle diameter in the range of 1 to 100 μm, and wherein the polymer particles essentially consist of a polymer selected from polyphenylene sulfone, polytetrafluoroethylene, perfluoroalkoxy alkane polymers, tetrafluoroethylene/ethylene copolymers; and high molecular weight polyolefins.

**7.** Polymer composition according to any of Claims 1 to 6, wherein the tribological additive B is selected from polytetrafluoroethylene particles, graphite, boron nitride, molybdenum disulfide, tungsten disulfide, silicon nitride, silicon carbide, boron carbide, calcium carbonate, titanium dioxide, silicon dioxide, cerium dioxide, aluminum oxide, copper particles, silver particles, carbon fibers, glass fibers, and aramid fibers.

**8.** Polymer composition according to any of Claims 1 to 7, wherein the polymer composition comprises from 0.5 to 5 wt.-%, based on the total polymer composition, at least one liquid lubricant C, selected from silicon oils.

**9.** Polymer composition according to any of Claims 1 to 8, wherein the polymer composition comprises at least one further component D, selected from crosslinking agents, thermal stabilizers, UV absorbers, and impact modifiers.

**10.** Polymer composition according to any of Claims 1 to 9, wherein the polymer matrix A exhibits a Vicat softening temperature of at least 130 °C, preferably of at least 150°C, more preferably of at least 170 °C, determined according to ISO 306 (B50).

**11.** Process for producing a polymer composition according to any of Claims 1 to 10, wherein the process comprises mixing the polymer matrix A and the at least one tribological additive B, and optionally further components C and/or D.

**12.** Formed article made of a polymer composition according to any of Claims 1 to 10.

**13.** Formed article according to Claim 12, wherein the formed article is utilized in or in form of pump casings, pump parts, transmission control equipment, chain guides, sliding bearings, ball bearings, sliding shoes, gear wheels, gear drives, rolls, pistons, piston rings, piston rods, clutches, brakes, seals, membranes, fittings, bushings, casings, valve casings, or valve parts.

**14.** Process for producing a formed article from a polymer composition according to any of Claims 1 to 10, preferably via injection molding or extrusion.

**15.** Process for producing a formed article according to claim 14, wherein the process encompasses at least one step of crosslinking by exposing the polymer composition to radiation, preferably radiation selected from beta radiation, gamma radiation, electron beam, x-ray radiation, and UV/Vis radiation.

## Patentansprüche

1. Polymerzusammensetzung für tribologische Anwendungen, umfassend eine Polymermatrix A, die mindestens ein Poly(meth)acrylimid umfasst, und mindestens ein tribologisches Additiv B, ausgewählt aus organischen teilchenförmigen Füllstoffen B1, anorganischen teilchenförmigen Füllstoffen B2 und Verstärkungsfasern B3, wobei das mindestens eine Poly(meth)acrylimid Folgendes umfasst:

   i) 1 bis 95 Gew.-%, vorzugsweise 20 bis 92 Gew.-%, bezogen auf das Gesamtgewicht des Poly(meth)acrylimids, Einheiten der Formel I,

   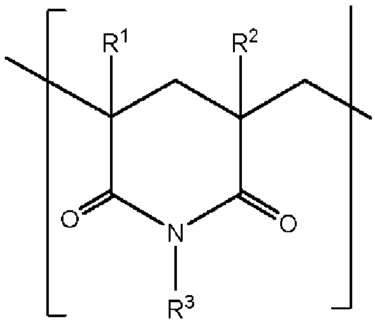

   (I);

   ii) 1 bis 70 Gew.-%, vorzugsweise 2 bis 60 Gew.-%, bezogen auf das Gesamtgewicht des Poly(meth)acrylimids, Einheiten der Formel II,

   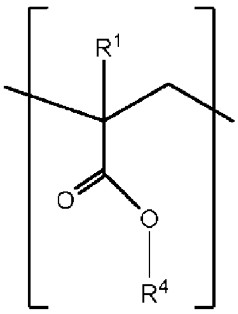

   (II);

   iii) 1 bis 20 Gew.-%, vorzugsweise 1 bis 12 Gew.-%, bezogen auf das Gesamtgewicht des Poly(meth)acrylimids, Einheiten der Formel III

   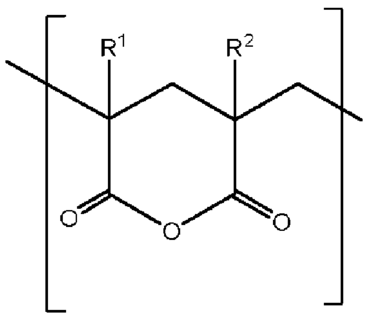

   (III);

   und
   iv) 0 bis 15 Gew.-%, vorzugsweise 0 bis 10 Gew.-%, bezogen auf das Gesamtgewicht des Poly(meth)acrylimids, Einheiten der Formel IV,

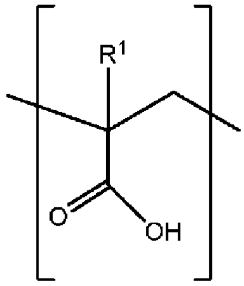

(IV),

wobei

$R^1$ und $R^2$ unabhängig voneinander für Wasserstoff oder $C_1$-$C_6$-Alkyl, vorzugsweise Wasserstoff oder Methyl, stehen; $R^3$ für Wasserstoff, $C_1$-$C_{18}$-Alkyl, $C_5$-$C_8$-Cycloalkyl, $C_6$-$C_{10}$-Aryl oder $C_6$-$C_{10}$-Aryl-$C_1$-$C_4$-alkyl steht, wobei diese Reste bis zu dreifach durch Reste, die aus der Gruppe bestehend aus $C_1$-$C_4$-Alkyl, $C_1$-$C_4$-Alkoxy und Halogen ausgewählt sind, substituiert sein können; und

$R^4$ für $C_1$-$C_{18}$-Alkyl, $C_5$-$C_8$-Cycloalkyl, $C_6$-$C_{10}$-Aryl oder $C_6$-$C_{10}$-Aryl-$C_1$-$C_4$-alkyl steht, wobei diese Reste bis zu dreifach durch Reste, die aus der Gruppe bestehend aus $C_1$-$C_4$-Alkyl, $C_1$-$C_4$-Alkoxy und Halogen ausgewählt sind, substituiert sein können.

**2.** Polymerzusammensetzung nach Anspruch 1, umfassend, jeweils bezogen auf das Gesamtgewicht der Polymerzusammensetzung:

50 bis 97 Gew.-%, vorzugsweise 60 bis 95 Gew.-%, der Polymermatrix A;
3 bis 30 **Gew.-%,** vorzugsweise 5 bis 25 **Gew.-%,** des mindestens einen tribologischen Additivs **B;**
0 bis 5 **Gew.-%,** vorzugsweise 0 bis 3 **Gew.-%,** mindestens eines Schmiermittels **C;**
0 bis 20 **Gew.-%,** vorzugsweise 0 bis 10 **Gew.-%,** einer oder mehrerer weiterer Komponenten **D.**

**3.** Polymerzusammensetzung nach Anspruch 1 oder **2,** wobei die Polymermatrix A mindestens 50 **Gew.-%,** bezogen auf die Polymermatrix A, des mindestens einen Poly(meth)acrylimids umfasst.

**4.** Polymerzusammensetzung nach einem der Ansprüche 1 bis **3,** wobei das mindestens eine Poly(meth)acrylimid mindestens 5 **Gew.-%,** bevorzugt mindestens 15 **Gew.-%,** weiter bevorzugt mindestens 60 **Gew.-%,** bezogen auf das gesamte Poly(meth)acrylimid, Einheiten der Formel (I) umfasst:

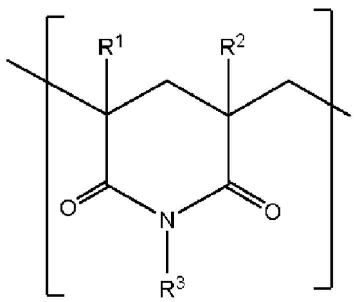

(I),

in der

$R^1$ und $R^2$ unabhängig voneinander für Wasserstoff oder $C_1$-$C_6$-Alkyl, vorzugsweise Wasserstoff oder Methyl, stehen und

$R^3$ für Wasserstoff, $C_1$-$C_{18}$-Alkyl, $C_5$-$C_8$-Cycloalkyl, $C_6$-$C_{10}$-Aryl oder $C_6$-$C_{10}$-Aryl-$C_1$-$C_4$-alkyl steht, wobei diese Reste bis zu dreifach durch Reste, die aus der Gruppe bestehend aus $C_1$-$C_4$-Alkyl, $C_1$-$C_4$-Alkoxy und Halogen ausgewählt sind, substituiert sein können.

**5.** Polymerzusammensetzung nach einem der Ansprüche 1 bis 4, wobei $R^1$, $R^2$, $R^3$ und $R^4$ für Methyl stehen.

**6.** Polymerzusammensetzung nach einem der Ansprüche 1 bis 5, wobei das mindestens eine tribologische Additiv B

mindestens einen organischen teilchenförmigen Füllstoff B1 umfasst, wobei der organische teilchenförmige Füllstoff B1 aus Polymerpartikeln mit einem L/D-Verhältnis im Bereich von 1 bis 3 und einem Partikeldurchmesser im Bereich von 1 bis 100 μm ausgewählt ist und wobei die Polymerpartikel im Wesentlichen aus einem Polymer bestehen, das aus Polyphenylensulfon, Polytetrafluorethylen, Perfluoralkoxyalkan-Polymeren, Tetrafluorethylen/Ethylen-Copolymeren und hochmolekularen Polyolefinen ausgewählt ist.

**7.** Polymerzusammensetzung nach einem der Ansprüche 1 bis 6, wobei das tribologische Additiv B aus Polytetrafluorethylenpartikeln, Graphit, Bornitrid, Molybdändisulfid, Wolframdisulfid, Siliciumnitrid, Siliciumcarbid, Borcarbid, Calciumcarbonat, Titandioxid, Siliciumdioxid, Cerdioxid, Aluminiumoxid, Kupferpartikeln, Silberpartikeln, Kohlenstofffasern, Glasfasern und Aramidfasern ausgewählt ist.

**8.** Polymerzusammensetzung nach einem der Ansprüche 1 bis 7, wobei die Polymerzusammensetzung 0,5 bis 5 Gew.-%, bezogen auf die gesamte Polymerzusammensetzung, mindestens eines flüssigen Schmiermittels C, das aus Silikonölen ausgewählt ist, umfasst.

**9.** Polymerzusammensetzung nach einem der Ansprüche 1 bis 8, wobei die Polymerzusammensetzung mindestens eine weitere Komponente D, die aus Vernetzern, Thermostabilisatoren, UV-Absorbern und Schlagzähmodifikatoren ausgewählt ist, umfasst.

**10.** Polymerzusammensetzung nach einem der Ansprüche 1 bis 9, wobei die Polymermatrix A eine Vicat-Erweichungstemperatur von mindestens 130 °C, vorzugsweise von mindestens 150 °C, weiter bevorzugt von mindestens 170 °C, bestimmt gemäß ISO 306 (B50), aufweist.

**11.** Verfahren zur Herstellung einer Polymerzusammensetzung nach einem der Ansprüche 1 bis 10, wobei das Verfahren das Mischen der Polymermatrix A und des mindestens einen tribologischen Additivs B und gegebenenfalls weiterer Komponenten C und/oder D umfasst.

**12.** Formkörper aus der Polymerzusammensetzung nach einem der Ansprüche 1 bis 10.

**13.** Formkörper nach Anspruch 12, wobei der Formkörper in oder in Form von Pumpengehäusen, Pumpenteilen, Getriebesteuerungen, Kettenführungen, Gleitlagern, Kugellagern, Gleitschuhen, Zahnrädern, Zahnradantrieben, Rollen, Kolben, Kolbenringen, Kolbenstangen, Kupplungen, Bremsen, Dichtungen, Membranen, Armaturen, Buchsen, Gehäusen, Ventilgehäusen oder Ventilteilen verwendet wird.

**14.** Verfahren zur Herstellung eines Formkörpers aus einer Polymerzusammensetzung nach einem der Ansprüche 1 bis 10, vorzugsweise durch Spritzgießen oder Extrusion.

**15.** Verfahren zur Herstellung eines Formkörpers nach Anspruch 14, wobei das Verfahren mindestens einen Schritt des Vernetzens durch Einwirkenlassen von Strahlung, vorzugsweise aus Beta-Strahlung, Gamma-Strahlung, Elektronenstrahl, Röntgenstrahlung und UV/Vis-Strahlung ausgewählter Strahlung, auf die Polymerzusammensetzung umfasst.

## Revendications

**1.** Composition de polymère pour applications tribologiques comprenant une matrice de polymère A, qui comprend au moins un poly(méth)acrylimide, et au moins un additif tribologique B, choisi parmi des charges particulaires organiques B1, des charges particulaires inorganiques B2 et des fibres de renforcement B3, dans laquelle l'au moins un poly(méth)acrylimide comprend :

i) de 1 à 95 % en poids, de préférence de 20 à 92 % en poids, par rapport au poids total du poly(méth)acrylimide, de motifs de formule I

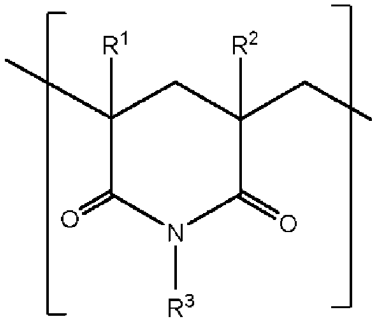

(I);

ii) de 1 à 70 % en poids, de préférence de 2 à 60 % en poids, par rapport au poids total du poly(méth)acrylimide, de motifs de formule II

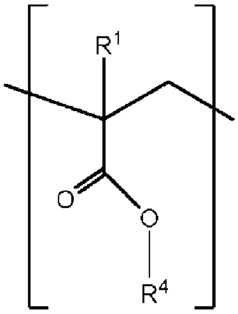

(II);

iii) de 1 à 20 % en poids, de préférence de 1 à 12 % en poids, par rapport au poids total du poly(méth)acrylimide, de motifs de formule III

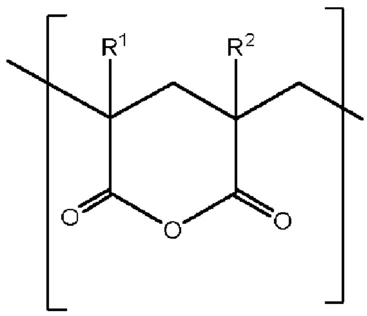

(III);

et

iv) de 0 à 15 % en poids, de préférence de 0 à 10 % en poids, par rapport au poids total du poly(méth)acrylimide, de motifs de formule IV

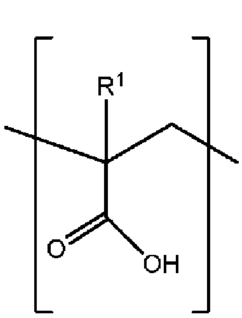

(IV),

dans laquelle

$R^1$ et $R^2$ sont, indépendamment l'un de l'autre, hydrogène ou $C_1$-$C_6$ alkyle, de préférence hydrogène ou

méthyle ;
$R^3$ est hydrogène, $C_1$-$C_{18}$-alkyle, $C_5$-$C_8$-cycloalkyle, $C_6$-$C_{10}$-aryle, ou $C_6$-$C_{10}$-aryl-$C_1$-$C_4$-alkyle, ces radicaux pouvant être jusqu'à trisubstitués par des radicaux choisis dans le groupe constitué par $C_1$-$C_4$-alkyle, $C_1$-$C_4$-alcoxy et halogène ; et
$R^4$ est $C_1$-$C_{18}$-alkyle, $C_5$-$C_8$-cycloalkyle, $C_6$-$C_{10}$-aryle, ou $C_6$-$C_{10}$-aryl-$C_1$-$C_4$-alkyle, ces radicaux pouvant être jusqu'à trisubstitués par des radicaux choisis dans le groupe constitué par $C_1$-$C_4$-alkyle, $C_1$-$C_4$-alcoxy et halogène.

**2.** Composition de polymère selon la revendication 1, comprenant, en chaque cas par rapport au poids total de la composition de polymère :

de 50 à 97 % en poids, de préférence de 60 à 95 % en poids, de la matrice de polymère A ;
de 3 à 30 % en poids, de préférence de 5 à 25 % en poids, de l'au moins un additif tribologique B ;
de 0 à 5 % en poids, de préférence de 0 à 3 % en poids, d'au moins un lubrifiant C ;
de 0 à 20 % en poids, de préférence de 0 à 10 % en poids, d'un ou plusieurs autres composants **D.**

**3.** Composition de polymère selon la revendication 1 ou 2, dans laquelle la matrice de polymère A comprend au moins 50 % en poids, par rapport à la matrice de polymère A, de l'au moins un poly(méth)acrylimide.

**4.** Composition de polymère selon l'une quelconque des revendications 1 à 3, dans laquelle l'au moins un poly(méth)acrylimide comprend au moins 5 % en poids, de préférence au moins 15 % en poids, de manière plus préférée au moins 60 % en poids, par rapport au poly(méth)acrylimide total, de motifs de formule (I)

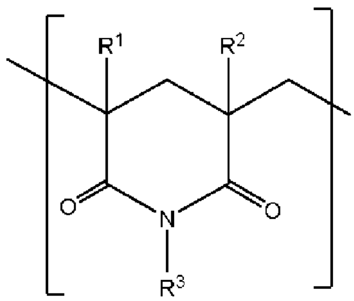
(I),

dans laquelle
$R^1$ et $R^2$ sont, indépendamment l'un de l'autre, hydrogène ou $C_1$-$C_6$ alkyle, de préférence hydrogène ou méthyle ; et
$R^3$ est hydrogène, $C_1$-$C_{18}$-alkyle, $C_5$-$C_8$-cycloalkyle, $C_6$-$C_{10}$-aryle, ou $C_6$-$C_{10}$-aryl-$C_1$-$C_4$-alkyle, ces radicaux pouvant être jusqu'à trisubstitués par des radicaux choisis dans le groupe constitué par $C_1$-$C_4$-alkyle, $C_1$-$C_4$-alcoxy et halogène.

**5.** Composition de polymère selon l'une quelconque des revendications 1 à 4, dans laquelle $R^1$, $R^2$, $R^3$ et $R^4$ sont méthyle.

**6.** Composition de polymère selon l'une quelconque des revendications 1 à 5, dans laquelle l'au moins un additif tribologique B comprend au moins une charge particulaire organique B1, dans laquelle la charge particulaire organique B1 est choisie parmi des particules de polymère ayant un rapport L/D dans la plage de 1 à 3 et un diamètre de particule dans la plage de 1 à 100 μm, et dans laquelle les particules de polymère sont essentiellement constituées d'un polymère choisi parmi une polyphénylène sulfone, un polytétrafluoroéthylène, des polymères de type perfluoroalcoxy alcane, des copolymères tétrafluoroéthylène/éthylène ; et des polyoléfines à poids moléculaire élevé.

**7.** Composition de polymère selon l'une quelconque des revendications 1 à 6, dans laquelle l'additif tribologique B est choisi parmi les particules de polytétrafluoroéthylène, le graphite, le nitrure de bore, le disulfure de molybdène, le disulfure de tungstène, le nitrure de silicium, le carbure de silicium, le carbure de bore, le carbonate de calcium, le dioxyde de titane, le dioxyde de silicium, le dioxyde de cérium, l'oxyde d'aluminium, des particules de cuivre, des particules d'argent, des fibres de carbone, des fibres de verre et les fibres d'aramide.

**8.** Composition de polymère selon l'une quelconque des revendications 1 à 7, dans laquelle la composition de polymère

comprend de 0,5 à 5 % en poids, par rapport à la composition de polymère totale, d'au moins un lubrifiant liquide C, choisi parmi les huiles de silicone.

**9.** Composition de polymère selon l'une quelconque des revendications 1 à 8, dans laquelle la composition de polymère comprend au moins un autre composant D, choisi parmi les agents de réticulation, les stabilisants thermiques, les absorbeurs d'UV et les modificateurs de résistance aux chocs.

**10.** Composition de polymère selon l'une quelconque des revendications 1 à 9, dans laquelle la matrice de polymère A présente une température de ramollissement Vicat d'au moins 130 °C, de préférence d'au moins 150 °C, de manière plus préférée d'au moins 170 °C, déterminée selon la norme ISO 306 (B50).

**11.** Procédé de production d'une composition de polymère selon l'une quelconque des revendications 1 à 10, dans lequel le procédé comprend le mélange de la matrice de polymère A et de l'au moins un additif tribologique B, et éventuellement d'autres composants C et/ou D.

**12.** Article mis en forme composé d'une composition de polymère selon l'une quelconque des revendications 1 à 10.

**13.** Article mis en forme selon la revendication 12, dans lequel l'article mis en forme est utilisé dans ou sous forme de carters de pompe, de pièces de pompe, d'équipement de commande de transmission, de guides de chaîne, de paliers lisses, de roulements à billes, de patins coulissants, de roues dentées, d'entraînements par engrenages, de rouleaux, de pistons, de segments de piston, de tiges de piston, d'embrayages, de freins, de joints, de membranes, de raccords, de douilles, de boîtiers, de corps de soupape ou de pièces de soupape.

**14.** Procédé de production d'un article mis en forme à partir d'une composition de polymère selon l'une quelconque des revendications 1 à 10, de préférence par moulage par injection ou par extrusion.

**15.** Procédé de production d'un article mis en forme selon la revendication 14, dans lequel le procédé comprend au moins une étape de réticulation par exposition de la composition de polymère à un rayonnement, de préférence un rayonnement choisi parmi un rayonnement bêta, un rayonnement gamma, un faisceau d'électrons, un rayonnement par des rayons X et un rayonnement UV/visible.

Fig. 1

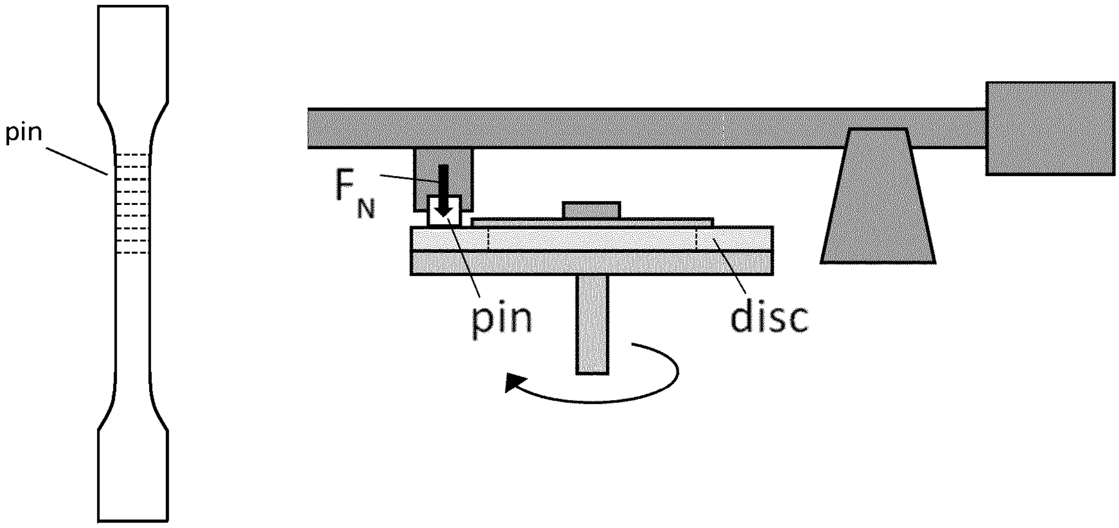

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 10329228 A1
- US 20130178565 A
- US 20050208313 A
- DE 19949239 A1
- WO 2012095214 A1
- US 20120114890 A1
- WO 2018069838 A
- GB 1078425 B
- GB 1045229 B
- US 3627711 B
- US 4139685 B
- US 2146209 A
- US 4246374 A
- US 5482987 B
- US 5641824 B
- US 9994670 B
- WO 2007106074 A2
- WO 2005021631 A1
- WO 9801085 A1


### Non-patent literature cited in the description


- **R. GÄCHTER** ; **H. MÜLLER**. Kunststoffadditive. Hauser Verlag, 443
- Kunststoff-Handbuch. Carl-Hanser-Verlag, 1975, 398